# EUROPÄISCHE PATENTANMELDUNG

(11) **EP 1 052 144 A2**
(43) Veröffentlichungstag der Anmeldung: **15.11.2000**
(21) Anmeldenummer: 00108067.0
(22) Anmeldetag: 25.04.2000
(51) Int. Cl.: B60Q 3/02

(54) **Stabförmiges, anisotrop emittierendes Beleuchtungselement**

(30) Priorität: 12.05.1999 DE 19921969
(71) Anmelder: Volkswagen Aktiengesellschaft, 38436 Wolfsburg (DE)
(72) Erfinder: Müller, Michael, 38518 Gifhorn (DE)

(57) **Zusammenfassung**

Die Erfindung betrifft ein stabförmiges, anisotrop lateral emittierendes Beleuchtungselement (1), das mit einem Befestigungsmittel an einem Formteil befestigbar ist, wobei das Beleuchtungselement (1) mit mindestens einer mechanischen Codierung (2) ausgebildet ist, die mit einer mechanischen Vorhaltung (6) des Befestigungsmittels (3) korrespondiert, wobei die mechanische Codierung (2) derart auf dem Beleuchtungselement (1) angebracht ist, so daß das Beleuchtungselement (1) lateral wohldefiniert zum Formteil ausgerichtet ist.

## Beschreibung

Die Erfindung betrifft ein stabförmiges, anisotrop lateral emittierendes Beleuchtungselement, das mittels eines Befestigungsmittels an einem Formteil, insbesondere im Innenraum eines Kraftfahrzeuges befestigbar ist.

Aus der WO 98/29277 ist ein Beleuchtungssystem für ein Massenbeförderungsmittel bekannt, dessen Beleuchtungselemente als lateral und vertikal lichtemittierende Lichtwellenleiter ausgebildet sind. Die Lichtwellenleiter sind zur Verbesserung der lateralen Abstrahlcharakteristik mit Einschnitten ausgebildet, die sich auf einer Seite des Lichtwellenleiters über dessen volle Länge erstrecken. Diese Einschnitte führen zu Diskontinuitäten des Brechungsprofils des Lichtwellenleiters, so daß verstärkt im Bereich der Einschnitte lateral abgestrahlt wird. Zur Befestigung des Lichtwellenleiters beispielsweise in einem verspiegelten Lampengehäuse werden verschiedene alternative Befestigungsmittel vorgeschlagen, beispielsweise ein geschlitzter Montagering, der kraftschlüssig den Lichtwellenleiter umfaßt und Rastmittel aufweist, die in korrespondierende Öffnungen im Lampengehäuse einrastbar sind. Weiter wird ein Befestigungsmittel vorgeschlagen, das den Lichtwellenleiter radial vollständig umfaßt und sich über dessen ganze Länge erstreckt und zur Befestigung in einem Panel mit einem im Querschnitt T-förmigen Steg ausgebildet ist, der mit einer Nut im Panel korrespondiert, wobei das Befestigungsmittel einstückig mit dem Lichtwellenleiter ausgebildet ist. Alternativ kann der Querschnitt auch die Form eines Tannenbaumes aufweisen. Ein anderes stabförmiges, anisotrop lateral emittierendes Beleuchtungselement ist beispielsweise eine teilverspiegelte Leuchtstoffröhre. Soll nun ein derartiges anisotrop lateral emittierendes Beleuchtungselement zur Beleuchtung des Innenraumes eines Kraftfahrzeuges an einem Formteil befestigt werden, so muß das Beleuchtungselement definiert ausgerichtet sein, um die gewünschten Beleuchtungseffekte zu erreichen. Dies erfolgt üblicherweise durch eine optische Kontrolle beim Befestigen, insbesondere in Ausführungsformen, wo das Beleuchtungselement und das Befestigungselement nicht einstückig miteinander verbunden sind. Diese optische Kontrolle ist jedoch sehr zeitaufwendig und mühselig, da die die Anisotropie hervorrufenden Merkmale nicht immer leicht zu erkennen sind.

Der Erfindung liegt daher das technische Problem zugrunde, ein stabförmiges anisotrop lateral emittierendes Beleuchtungselement zu schaffen, das einfach wohldefiniert ausgerichtet an einem Befestigungsmittel montierbar ist.

Die Lösung des technischen Problems ergibt sich durch die Merkmale des Patentanspruchs 1. Weitere vorteilhafte Ausgestaltungen der Erfindung ergeben sich aus den Unteransprüchen.

Durch die Ausbildung des Beleuchtungselementes mit einer mechanischen Codierung, die mit einer mechanischen Vorhaltung des Befestigungsmittels korrespondiert, wobei die mechanische Codierung derart auf dem Beleuchtungselement angebracht ist, so daß das Beleuchtungselement lateral wohldefiniert zum Formteil ausgerichtet ist, wird sichergestellt, daß das Beleuchtungselement überhaupt nicht falsch ausgerichtet mit dem Befestigungsmittel befestigt werden kann, so daß sich eine Selbstjustierung ergibt, die eine nachträgliche Verdrehung verhindert und zusätzliche optische Nachkontrollen einspart, was den Montagevorgang wesentlich vereinfacht.

Die bevorzugten mechanischen Codierungen sind wesentlich von der Art der verwendeten Beleuchtungselemente abhängig und können sowohl partiell als auch regelmäßig verteilt am Beleuchtungselement angeordnet sein. Bei der Ausbildung des Beleuchtungselementes als Lichtwellenleiter können die Einschnitte bzw. anderen mechanischen Veränderungen der Oberfläche zur Erzeugung der Anisotropie selbst als mechanische Codierung zur Ausrichtung verwendet werden.

Die Erfindung wird nachfolgend anhand eines bevorzugten Ausführungsbeispiels näher erläutert. Die Fig. zeigen:
- Fig. 1: eine Vorderansicht auf ein stabförmiges lateral, anisotrop emittierendes Beleuchtungselement mit einem Befestigungsmittel und
- Fig. 2: eine Seitenansicht auf ein stabförmiges Beleuchtungselement mit einem Befestigungsmittel.

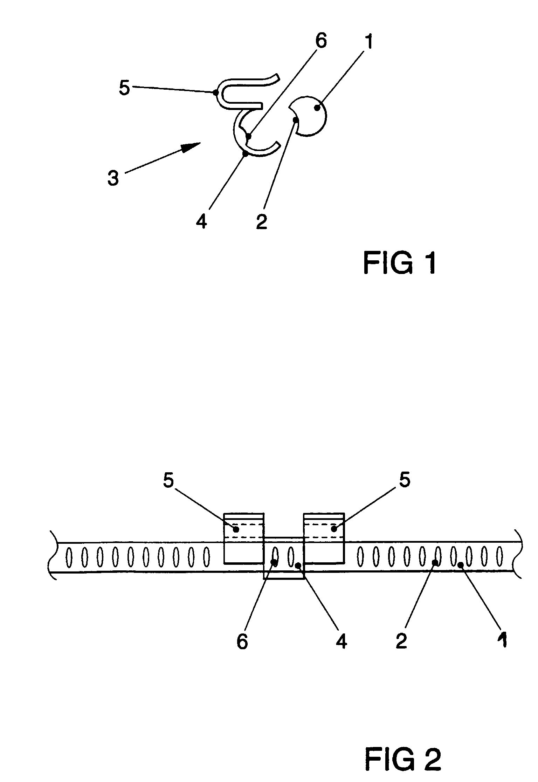

In der Fig. 1 ist eine Vorderansicht eines stabförmigen, lateral anisotrop emittierenden Beleuchtungselementes 1 dargestellt, das beispielsweise als Lichtwellenleiter ausgebildet ist. Das Beleuchtungselement 1 ist im wesentlichen kreisförmig ausgebildet. In einem Bereich ist das Beleuchtungselement mit einer mechanischen Codierung 2 in Form einer Kerbe ausgebildet. Diese mechanische Codierung 2 ist wohldefiniert zur lateralen Hauptstrahlrichtung des Beleuchtungselementes 1 angeordnet. Im dargestellten Ausführungsbeispiel ist die Hauptstrahlrichtung auf der mechanischen Codierung 2 gegenüberliegenden Seite. Zur Befestigung des Beleuchtungselementes 1 beispielsweise an einem Formteil in einem Kraftfahrzeug dient ein Befestigungsmittel 3. Das Befestigungsmittel 3 umfaßt ein erstes Befestigungselement 4 und ein zweites Befestigungselement 5. Das erste Befestigungselement 4 ist im Querschnitt im wesentlichen C-förmig ausgebildet und dient zur kraftschlüssigen Aufnahme des Beleuchtungselementes 2. Das erste Befestigungselement 4 ist mit einer zur mechanischen Codierung 2 des Beleuchtungselementes 1 komplementären mechanischen Vorhaltung 6 ausgebildet, die eine definierte Ausrichtung des Beleuchtungselementes 1 im Befestigungselement 4 erzwingt und eine nachträgliche Verdrehung verhindert. Dadurch ist das Beleuchtungselement 1 auch wohldefiniert ausgerichtet, wenn das Befestigungsmittel 3 mit dem zweiten Befestigungselement 5 beispielsweise an einem Formteil befestigt wird.

In der Fig. 2 ist eine Seitenansicht des Beleuchtungselementes 1 mit periodisch entlang der Längsrichtung angeordneten mechanischen Codierungen 2 dargestellt, die mit den komplementären mechanischen Vorhaltungen 6 des ersten Befestigungselementes 4 in Eingriff stehen.

### BEZUGSZEICHENLISTE

- 1): Beleuchtungselement
- 2): mechanische Codierung
- 3): Befestigungsmittel
- 4): Befestigungselement
- 5): Befestigungselement
- 6): Vorhaltung

## Patentansprüche

1. Stabförmiges, anisotrop lateral emittierendes Beleuchtungselement, das mit einem Befestigungsmittel an einem Formteil befestigbar ist,
**dadurch gekennzeichnet,** daß
das Beleuchtungselement (1) mit mindestens einer mechanischen Codierung (2) ausgebildet ist, die mit einer mechanischen Vorhaltung (6) des Befestigungsmittels (3) korrespondiert, wobei die mechanische Codierung (2) derart auf dem Beleuchtungselement (1) angebracht ist, so daß das Beleuchtungselement (1) lateral wohldefiniert zum Formteil ausgerichtet ist.

2. Beleuchtungselement nach Anspruch 1, dadurch gekennzeichnet, daß die mechanische Codierung (2) als Abflachung oder Kerbe ausgebildet ist.

3. Beleuchtungselement nach Anspruch 1 oder 2, dadurch gekennzeichnet, daß das Beleuchtungselement (1) als teilverspiegelte Leuchtstoffröhre ausgebildet ist.

4. Beleuchtungselement nach Anspruch 1 oder 2, dadurch gekennzeichnet, daß das Beleuchtungselement (1) als Lichtwellenleiter ausgebildet ist.

5. Beleuchtungselement nach Anspruch 4, dadurch gekennzeichnet, daß der Lichtwellenleiter zur Erzeugung der Anisotropie mit partiellen Einschnitten an der Oberfläche ausgebildet ist, die die mechanische Codierung (2) bilden.

6. Befestigungsmittel zur Befestigung eines stabförmigen, anisotrop lateral emittierenden Beleuchtungselementes nach einem der vorangegangenen Ansprüche, dadurch gekennzeichnet, daß das Befestigungsmittel (3) mit einer zur mechanischen Codierung (2) des Beleuchtungselementes (1) komplementären mechanischen Vorhaltung (6) ausgebildet ist.
